# EUROPEAN PATENT APPLICATION

(11) **EP 2 899 176 A1**
(43) Date of publication of application: **29.07.2015**
(21) Application number: 15152307.3
(22) Date of filing: 23.01.2015
(51) Int. Cl.: C04B 35/565, C04B 35/622

(54) **Ceramic structure**

(30) Priority: 24.01.2014 JP 2014011786
(71) Applicant: Ibiden Co., Ltd, Ogaki-shi, Gifu 503-8604 (JP)
(72) Inventor: Takagi, Takashi, Gifu, 501-0695 (JP); Maruyama, Hisaaki, Gifu, 501-0695 (JP)
(74) Representative: Hoefer & Partner Patentanwälte mbB

(57) **Abstract**

There is provided a ceramic structure including silicon carbide (SiC). The silicon carbide includes carbon, and silicon which has ²⁸Si enriched in comparison with a natural abundance ratio. An enrichment level of the ²⁸Si in the silicon carbide may be 99% or higher. The silicon carbide may be in the form of at least any one of an SiC sintered body, CVD-SiC, SiC fiber, and an SiC/SiC composite.

## Description

### CROSS-REFERENCE TO RELATED APPLICATION

This application claims priority from Japanese Patent Application No. 2014-011786, filed on January 24, 2014, the entire subject matter of which is incorporated herein by reference.

### BACKGROUND OF THE INVENTION

### Field of the Invention

The present invention relates to a ceramic structure.

### Description of the Related Art

Nuclear energy such as nuclear fusion and nuclear fission is high in energy density per unit weight, and generates no carbon dioxide, so that nuclear energy is a promising energy source from the viewpoint of prevention of global warming. A structural material used for a nuclear power reactor for obtaining nuclear energy is limited from the viewpoint of heat resistance, neutron absorption, strength, chemical stability, long-term reliability, and the like, and for example, an aluminum alloy, a zirconium alloy, stainless steel, a low-alloy steel nickel-base/iron-base alloy, and the like may be used depending on the intended use.

For example, JP-T-2008-501977 discloses a fuel cladding tube which is designed to assure that all radioactive gases and solid fission products are retained within the tube and are not released to a coolant during normal operation of a nuclear power reactor or during conceivable accidents. Also, there is described that damages of the fuel cladding can lead to the subsequent releases of heat, hydrogen, and ultimately, fission products, to the coolant. Further, there is described a problem with a conventional fuel cladding in that, for example, a metal cladding is relatively soft, and tends to wear and erode when contacted by debris that sometimes enters a coolant system and contacts the fuel. Thus, JP-T-2008-501977 proposes an improved multi-layered ceramic tube (an SiC member for a nuclear power reactor) which can be used to contain fissile fuel within a nuclear power reactor. The improved multi-layered ceramic tube includes an inner layer of monolithic silicon carbide, an intermediate layer which is a composite of silicon carbide fibers surrounded by a silicon carbide matrix, and an outer layer of monolithic silicon carbide, whereby its safety and performance can be enhanced.

It has become clear that SiC used for a ceramic structure has high performance characteristics in terms of heat resistance, chemical stability, neutron absorption, and strength. However, SiC is a material under research and development, where verification of SiC as to long-term reliability is inadequate.

### SUMMARY OF THE INVENTION

Accordingly, an aspect of the present invention provides a ceramic structure which has long-term reliability.

According to an illustrative embodiment of the present invention, there is provided a ceramic structure including silicon carbide (SiC). The silicon carbide includes carbon, and silicon which has ²⁸Si enriched in comparison with a natural abundance ratio.

In the above ceramic structure, a preferable enrichment level of the ²⁸Si in the silicon carbide is 99% or higher.

In the above ceramic structure, the silicon carbide is in the form of at least any one of an SiC sintered body, CVD-SiC, SiC fiber, and an SiC/SiC composite.

According to the above ceramic structure, since the silicon included in the silicon carbide mainly includes ²⁸Si, the silicon is less likely to be converted into other atoms such as phosphorus by being exposed to neutron irradiation. Therefore, transformation of the silicon carbide by neutron irradiation can be prevented, so that the ceramic structure can be provided with showing long-term reliability by maintaining its shape and strength without being transformed or deformed, even under a harsh environmental condition, such as being irradiated with neutrons in a nuclear power reactor or in a nuclear fusion reactor and so on.

### BRIEF DESCRIPTION OF THE DRAWINGS

The above and other aspects of the present invention will become more apparent and more readily appreciated from the following description of illustrative embodiments of the present invention taken in conjunction with the attached drawings, in which:
FIG. 1 is a perspective view of a cladding tube for which a ceramic structure according to an illustrative embodiment of the present invention is used;
FIG. 2 is a schematic diagram for explaining ³⁰Si converted into ³¹P; and
FIG. 3 is a schematic diagram for illustrating a formation process of an SiC sintered body, CVD-SiC, SiC fiber, and an SiC/SiC composite according to an illustrative embodiment of the present invention.

### DETAILED DESCRIPTION

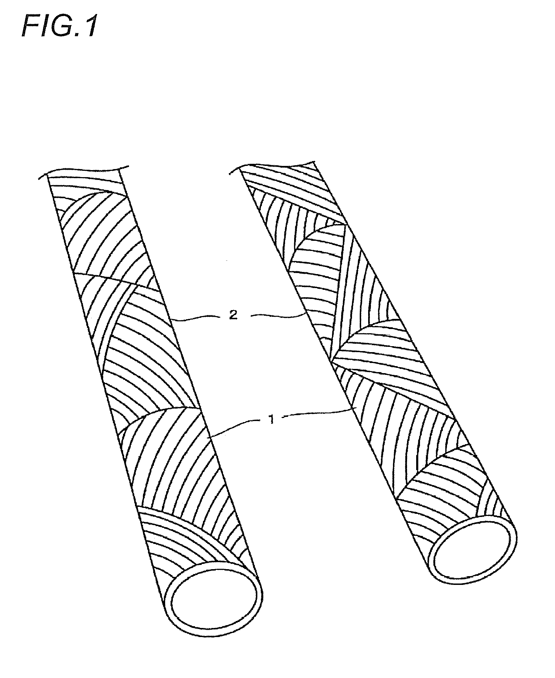

Hereinafter, a ceramic structure according to an illustrative embodiment of the present invention will be described with reference to FIGS. 1 to 3.

A ceramic structure 1 according to an illustrative embodimetn of the present invention includes silicon carbide (SiC) including carbon and silicon which has ²⁸Si enriched in comparison with a natural abundance ratio. Further, in the ceramic structure 1, the enrichment level of the ²⁸Si in the silicon carbide may be 99% or higher, and the silicon carbide may be used in the form of an SiC sintered body, CVD-SiC, SiC fiber, an SiC/SiC composite, and the like.

FIG. 1 is a view showing an example where the ceramic structure 1 is used for a cladding tube 2 used in a nuclear power reactor or the like, and the ceramic structure 1 is used as the cladding tube 2, or as a protection layer for an outer layer or an inner layer of the cladding tube 2.

While described above are specific usage examples of the ceramic structure 1, the ceramic structure 1 may be also used for members for a nuclear power reactor such as a control rod, a control rod guide, a fuel cladding, a core support pedestal, a core block, an upper core gas plenum, an inner insulation coating, a high-temperature duct, and a heat exchanger, or combinations thereof

While the ceramic structure 1 is made from a raw material of which the enrichment level of the ²⁸Si in the silicon carbide is preferably 99% or higher, and used in the form of an SiC sintered body, CVD-SiC, SiC fiber, an SiC/SiC composite, or the like, the enriched ²⁸Si is commercially available. For example, the abundance ratio of ²⁸Si in SiO₂ which is produced by TAIYO NIPPON SANSO CORPORATION and explained on page III-148 of the stable isotope full line catalog (Taiyo Nippon Sanso, catalog "Isotec® Stable Isotopes", Version 11, 2013, page III-148) is 99%. By being produced from the above-described SiO₂, a ceramic structure can be provided with showing long-term reliability by maintaining its shape and strength without being transformed or deformed, even under a harsh environment, such as being irradiated with neutrons in a nuclear power reactor or in a nuclear fusion reactor, and so on.

In an illustrative embodiment of the present invention, a raw material of which enrichment level of ²⁸Si in silicon carbide is 99% or higher is used for the following reasons.

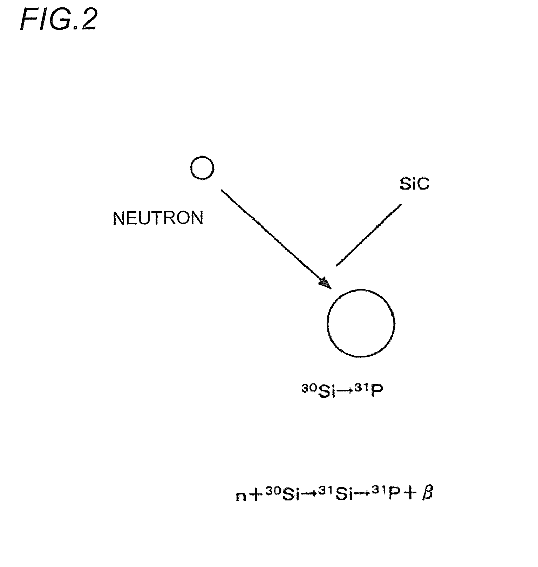

First, analysis values of the abundance ratios of naturally-occurring isotopes of Si are, for example, ²⁸Si: 92.27%, ²⁹Si: 4.68%, ³⁰Si: 3.05% (see page IV-2 of the above-described catalog), and the like. However, if ³⁰Si is present, the ³⁰Si is convered into ³¹P by neutron irradiation, and the characteristics of Si deteriorate. FIG. 2 is a schematic diagram for expaining ³⁰Si converted into ³¹P.

When silicon is irradiated with neutrons, ³⁰Si (a natural abundance ratio: 3.05%) in the silicon (isotope element composition: ²⁸Si, ²⁹Si, and ³⁰Si) is irradiated with neutrons to generate ³¹Si (a half-life: 2.62 hours). The ³¹Si emits a beta ray (beta decay), undergoes nuclear transformation, and is converted into phosphorus (³¹P) which is a stable isotope.
Silicon neutron irradiation doping is a method using this phenomenon for irradiating silicon single crystals with neutrons and uniformly doping (adding) phosphorus (³¹P) in the single crystals. The distribution of the phosphorus in the silicon single crystals shows uniformity that cannot be obtained by a conventional method for adding an impurity element, so that the silicon neutron irradiation doping is one field of semiconductor manufacturing. For example, the literature "Principle of silicon semiconductor manufacturing by neutron irradiation" (reference number 08-04-01-25, edited by "Research Organization for Information Science and Technology" referring to references: M. Tanenbaum & A.D. Mills, J. Electrochem. Soc., Vol. 108 p.171; Tatsuo ITO and Masato TODA, Silicon Doping by Neutron Irradiation, Radiation and Industrials, No. 64 P19 (1994); Semiconductor Processing, ASTIM STP850 Special Technical Publication 850 (1984); edited by Japan Atomic Energy Agency Test Reacter Dvision, Test Reacter Handbook (1996); edited by Japan Atomic Energy Agency Tokai Research Institution, Test Reacter -Present Situation and Role (1992)) provided by Research Organization for Information Science & Technology describes this method.

It is known in the semiconductor field that ³⁰Si is converted into phosphorus by being exposed to neutron irradiation. However, it is predicted that this nuclear reaction is encouraged in a nuclear power reactor/nuclear fusion reactor where ³⁰Si is exposed to considerable neutron irradiation for a long time to cause nuclear reaction (conversion) where silicon is converted into phosphorus, whereby the ceramic structure 1 containing silicon carbide is degraded. Since the abundance ratio of naturally-occurring ³⁰Si is 3.05%, the binding could be damaged when ³⁰Si converted into ³¹P, so as to cause a reduction in strength.

Therefore, enriching ²⁸Si which is less nuclear reactive (less convertible) allows the ceramic structure 1 with long-term reliability to be provided.

A method for mass segregation of ²⁸Si on a large scale, namely, a technique for enriching ²⁸Si is known. For example, JP-A-2003-53153 describes a method of infrared multiple-photon decomposition of a silicon halide with the use of laser beams. Segregation/enrichment of silicon isotopes such as ²⁸Si, ²⁹Si, and ³⁰Si is performed by oscillating laser beams from laser sources having different wavelengths, adjusting the energy of the laser beams by passing the oscillated laser beams through a CaF₂ crystal plate or controlling the discharge voltage of laser electrodes, and synchronously irradiating the adjusted laser beams to the hallides.

In addition, JP-T-2005-532155 describes a method for mass segregation of ²⁸Si from naturally-occurring Si on a large scale. In this method, a naturally-occurring isotope composition is made to pass through a medium, moving as a mass flow by diffusion, and optionally further by convection, in one cycle, and thereby the isotopes are purified so that an intended isotope is enriched in the mass flow of one purified substance. Then, the mass flow of enriched purified substance is collected to be sent so as to pass through another cycle, and thereby a purified substance in which the content of the intended isotope is further increased is obtained. Then, a specific isotope in the isotope composition which is purified by using the difference in mass diffusion degree among the isotopes is separated by repeating these cycles until the intended isotope is sufficiently enriched.

In addition, JP-A-2010-23013 describes a method for segregating isotopes of silicon by using ion-exchange (ion-substitution) chromatography. The method includes a step of pouring an aqueous solution of sodium hexafluorosilicate into a packed tower filled up with a type I strong basic ion-exchange resin, making the type I strong basic ion-exchange resin absorb the sodium hexafluorosilicate, and enriching silicon of heavy isotope on a front end interface between the sodium hexafluorosilicate and the type I strong basic ion-exchange resin, and a step of pouring an aqueous solution of sodium thiocyanate into the packed tower, making the sodium thiocyanate substitute for the absorbed sodium hexafluorosilicate, and thereafter enriching silicon of light isotope on a back end interface between the sodium hexafluorosilicate and the sodium thiocyanate.

In addition, in the Si-related industrial, a variety of substances can be made from silica sand as a raw material which is present in abundance in nature, and thus a variety of ²⁸Si compounds can be made similarly from enriched ²⁸Si which is in the form of silica sand (SiO₂).

An SiC sintered body, CVD-SiC, SiC fiber, an SiC/SiC composite, and the like are formed from the above-described SiO₂ in which ²⁸Si is enriched. The SiC sintered body, CVD-SiC, or SiC/SiC composite can provide a material for a structure by itself, and thus can provide a ceramic structure 1 having a high strength with being less deformable. Further, the SiC fiber can provide a material for a structure by being composited with another material which becomes a matrix, and thus can provide a ceramic structure 1 having a high strength and being less deformable.

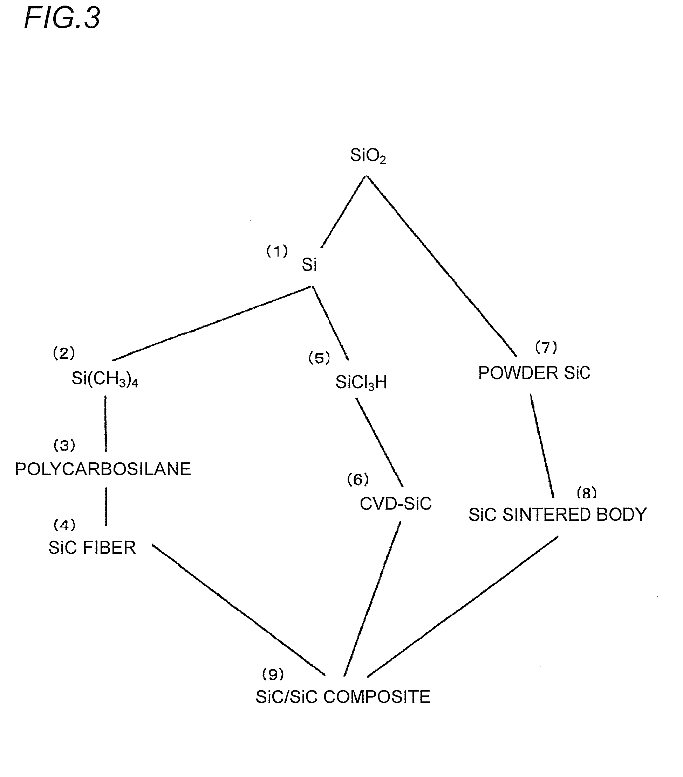

A variety of methods can be applied to methods for producing the SiC sintered body, CVD-SiC, SiC fiber, SiC/SiC composite, and the like using SiO₂ as shown in the schematic diagram for illustrating a formation process of FIG. 3. Hereinafter, the numbers in parentheses in FIG. 3 coincide with the following descriptions concerning the methods for producing the SiC sintered body, CVD-SiC, SiC fiber, SiC/SiC composite, and the like. It is to be noted that in the methods for producing the SiC sintered body, CVD-SiC, SiC fiber, the SiC/SiC composite, and the like to be described below, SiO₂ in which ²⁸Si is enriched is used as an Si raw material, and descriptions such as 28 indicating atomic weights are omitted because no other Si gets mixed therein.

### <Si> (1)

Si can be obtained, for example, by reducing SiO₂ with the use of an arc furnace using an carbon electrode. The obtained Si is mixed with a compound such as trichloromethylsilane and chlorosilane of which halogen such as chlorine substitutes for a part of hydrogen atoms in order to increase the purity, and is distilled to increase the purity, and then Si can be obtained again. A float zone method (FZ method), a Czochralski method (CZ method), and the like can be used in order to further increase the purity. These methods are widely used in the semiconductor industry.

### <Si(CH₃)₄> (2)

Si(CH₃)₄ (tetramethylsilane) can be obtained by directly reacting the Si with CH₃Cl. In the reaction of Si with CH₃Cl, a methyl group and chlorine bind to the silicon to form acompound, SiClₓ(CH₃)₄₋ₓ (where x = 1, 2, 3). Distilling the product after the reaction allows the intended Si(CH₃)₄ to be purified.

### <Polycarbosilane> (3)

Polycarbosilane can be made from Si(CH₃)₄ by a vapor-phase pyrolysis method. It is described that this method was carried out by Fritz and the like in: Hiroshi ICHIKAWA, "Research on production of silicon carbide fiber a precursor substance of which is polycarbosilane", published in 1986 (http://ir.library.osaka-u.ac.jp/dspace).

### <SiC fiber> (4)

SiC fiber can be produced from polycarbosilan as a precursor by melting-spinning and fiberizing the polycarbosilan, giving non-melting treatment thereto, and then firing the product. Thermal oxygen cross-linkage, an electron beam irradiation method, and the like can be used as a method for non-melting treatment.

### <SiCl₃H> (5)

A raw material to obtain SiC by a CVD method is produced. If decomposed to obtain SiC, the raw material may pass thorough any compounds. For example, silane compounds such as SiH₄, SiClH₃, SiCl₂H₂, SiCl₃H, and SiCl₄, and compounds such as these silane compounds of which a methyl group substitutes for a part of the silane compounds may be used. When using a raw matreial which contains no carbon, CVD-SiC can be obtained by mixing carbon hydride with the raw material.

Hereinafter, a description of a method for producing SiCl₃H (trichlorosilane) from Si will be provided.

SiCl₃H can be obtained from the above-described Si (1) by reacting hydrogen chloride gas with silicon powder at about 300°C. Silicon tetrachloride (SiCl₄), disilicon hexachloride (Si₂Cl₆), dichlorosilane (H₂SiCl₂), and the like are mixed in the SiCl₃H as by-products. SiCl₃H of high purity can be obtained by distillation.

### <CVD-SiC> (6)

A base material is placed in a CVD furnace, and raw material gas containing the above-described ²⁸Si is supplied under an atmosphere at 800 to 2000°C. CVD-SiC in which ²⁸Si is enriched in comparison with a natural abundance ratio is generated on the surface of the base material.

It is also possible to produce an SiC/SiC composite from the produced SiC fiber or CVD-SiC as described later (9). The SiC/SiC composite is an SiC fiber-reinforced SiC base composite material, and produced by impregnating, drying, and sintering an SiC fiber preform into a densified shape product.

### <Powder SiC> (7)

It is also possible to produce an SiC sintered body by producing SiC from SiO₂. For example, powder SiC (7) can be produced by an Acheson process by placing a mixture of a carbon raw material (C) and silica (SiO₂) in an Acheson furnace to directly energize. Thus-obtained powder SiC is mainly α-SiC.

It is also possible to produce powder SiC (7) in another production method by reacting pellets made from powder of SiO₂ and C at 1700 to 1800°C using a vertical continuous synthesis furnace. Thus-obtained powder SiC is mainly β-SiC.

As described above, as SiC, there are β-SiC which has a zinc blende structure (expressed as 3C), and α-SiC which is expressed as a combination of a zinc blende structure and a wurtzite structure having the same character as the zinc blende structure. In general, α-SiC is industrially produced most in the Acheson process mainly as a polishing agent. SiC produced in the Acheson process is generally large in grain diameter, and even the smallest SiC has an average diameter of 5 µm (JIS3000), and a micronization process is further required to use as a sintering raw material. β-SiC is produced mainly for sintering use, and synthesis methods by the solid-phase reaction, the vapor-phase reaction, and the like have been developed. It is also known that the β-SiC is synthesized also in the Acheson process in a low-temperature range of the reaction. The vapor-phase reaction method defines a method for synthesizing the β-SiC by reaction with silane gas or methane gas, or by thermal decomposition of polycarbosilane and the like, and allows ultrafine-powder SiC of high purity having a diameter of 0.1 µm or less to be provided. When the ultrafine powder SiC is sintered at temperatures over about 2100°C, abnormal grain growth occurs threto because of phase transition to β-SiC.

### <SiC sintered body> (8)

An SiC sintered body can be obtained by adding a sintering auxiliary agent and a binder to the obtained powder SiC (7), and then shape forming, defatting, and sintering the mixture. Examples of the sintering auxiliary agent include Al₂O₃, Al₂O₃-Y₂O₃,B, and B₄C. A resin such as polyvinyl alcohol can be used as the binder. A CIP (Cold Isostatic Press) method, a uniaxial press, and the like can be used for the shape forming step, and the shape forming is not limited specifically. In the defatting step, the binder is removed. The sintering step is performed, for example, at 1500 to 2300°C.

### <SiC/SiC composite> (9)

An SiC/SiC composite (9) can be obtained by combining the SiC fiber (4), the CVD-SiC (6), and the SiC sintered body (8) thus obtained. Examples of a method for obtaining the SiC/SiC composite include a method for mixing the SiC fiber or the CVD-SiC with the raw material of the SiC sintered body, and a method for coating the SiC fiber or the SiC sintered body with the CVD-SiC.

In the method for mixing the SiC fiber or the CVD-SiC with the raw material of the SiC sintered body, an SiC/SiC composite in which the SiC fiber or the CVD-SiC is mixed in the sintered body is obtained. In addition, in the method for coating the SiC fiber or the SiC sintered body with the CVD-SiC, an SiC/SiC composite coated with the CVD-SiC is obtained. Further, parts may be formed from these SiCs, and combined to obtain a ceramic structure.

The ceramic structure according to an illustraive embodiment of the present invention is in the form of an SiC sintered body, CVD-SiC, SiC fiber, an SiC/SiC composite, and the like, and examples of the raw materials, the additives, the intermediate materials in the production route of the ceramic structure include the materials shown in FIG. 3; however, the application of the present invention is not limited to these examples. Being made from the SiC consisting approximately only of ²⁸Si, and containing very little ³⁰Si, the ceramic structure 1 according to the illustrative embodiment of the present invention is not transformed even when it is hit by neutrons. In addition, the characteristics of the ceramic structure 1 can be prevented from deteriorating due to conversion of ³⁰Si into ³¹P by neutron irradiation.

It is to be noted that the present invention is not intended to be limited to the illustrative embodiment described above, and suitable modifications, improvements, and the like are possible. The materials, shapes, sizes, numerical values, configurations, numbers, arrangement positions, and the like of the elements in the above-described illustrative embodiment are arbitrary, and not limited as long as the present invention can be achieved.

The ceramic structure according to an illustrative embodiment of the present invention can be used for cladding tubes, channel boxes, and the like which should not be transformed even under an environment of being irradiated with neutrons such as a nuclear power reactor and a nuclear fusion reactor.

## Claims

1. A ceramic structure comprising silicon carbide (SiC), the silicon carbide comprising:
carbon; and
silicon which has ²⁸Si enriched in comparison with a natural abundance ratio.

2. The ceramic structure according to claim 1,
wherein an enrichment level of the ²⁸Si in the silicon carbide is 99% or higher.

3. The ceramic structure according to claim 1 or 2,
wherein the silicon carbide is in the form of at least any one of an SiC sintered body, CVD-SiC, SiC fiber, and an SiC/SiC composite.
